# EUROPÄISCHE PATENTSCHRIFT

(11) **EP 2 116 766 B1**
(45) Veröffentlichungstag und Bekanntmachung des Hinweises auf die Patenterteilung: **27.01.2016**
(21) Anmeldenummer: 09154688.7
(22) Anmeldetag: 10.03.2009
(51) Int. Cl.: F23D 11/36, F23D 14/64, F23D 17/00, F23R 3/14, F23R 3/28, F23R 3/34, F23R 3/36

(54) **Brenner mit Brennstofflanze**
Burner with fuel lance
Brûleur avec lance à combustible

(30) Priorität: 09.05.2008 CH 7242008
(43) Veröffentlichungstag der Anmeldung: 11.11.2009
(73) Patentinhaber: ALSTOM Technology Ltd, 5400 Baden (CH)
(72) Erfinder: Engelbrecht, Ernest Geoffrey, 5408 Ennetbaden (CH); Jhalani, Anurag, 5417 Untersiggenthal (CH); Paikert, Bettina, 5452 Oberrohrdorf (CH); Carroni, Richard, 5443 Niederrohrdorf (CH); Bialkowski, Michal, 5417 Untersiggenthal (CH); Poyyapakkam, Madhavan Narasimhan, 5507 Mellingen (CH)
(74) Vertreter: Pesce, Michele

(56) Entgegenhaltungen:
- EP-A- 1 255 080
- EP-A- 1 462 716
- EP-A1- 2 072 899
- EP-A2- 2 126 471
- US-A1- 2004 177 615

## Beschreibung

### Technisches Gebiet

Die vorliegende Erfindung betrifft einen zweiten Brenner einer Gasturbinenanlage mit sequentieller Verbrennung, welche eine erste und eine zweite Brennkammer aufweist, mit einer Lanze zum Einbringen von gasförmigem Brennstoff. Die Erfindung betrifft ausserdem Verfahren zum Betrieb einer Gasturbine mit einer derartigen Lanze.

### Stand der Technik

Bei bestimmten Brennern, insbesondere bei Vormischbrennern, kann mit Hilfe einer Lanze gasförmiger und/oder flüssiger Brennstoff eingebracht werden. In der Regel dient der über die Lanze eingebrachte Brennstoff zur Stabilisierung einer Flammenfront in der Brennkammer oder einem Pilotbetrieb der Brennkammer. Bei einer speziellen Bauart weist die jeweilige Lanze einen Fuss sowie einen im wesentlichen rechtwinklig davon abstehenden, zylindrischen Schaft auf. Über den Fuss ist die Lanze an einer Brennerwand abgestützt, derart, dass sich der Fuss quer zu einer Hauptströmungsrichtung des Brenners erstreckt, während sich der Schaft im wesentlichen mittig im Brenner parallel zur Hauptströmungsrichtung erstreckt. Für die Einleitung des gasförmigen Brennstoffs ist die Lanze an ihrem Schaft mit mindestens einer Düse ausgestattet.

Herkömmliche Brenner, wie sie in der EP0623786 offenbart sind, arbeiten in der Regel mit Erdgas als gasförmigem Brennstoff, der über die Lanze in den Brenner eingebracht wird. Für eine günstige Durchmischung mit der, den Brenner in dessen Hauptdurchströmungsrichtung durchströmenden Luft, hatte es sich als günstig erwiesen, den Brennstoff bezüglich einer Längsmittelachse des Schafts radial in den Brenner einzudüsen, was z. B. in der EP1030109 offenbart ist.

EP 2072899 (Stand der Technik gemäß Artikel 54(3) EPÜ) beschreibt einen Brenner einer Brennkammer einer Gasturbinenanlage mit sequentieller Verbrennung, welche eine erste und eine zweite Brennkammer aufweist, umfassend ein Strömungshindernis, dass im Betrieb mindestens ein Wirbelpaar in der Strömung erzeugt und eine Lanze zum Einbringen von *flüssigen Brennstoff* mit einem Fuß und einem davon abstehenden Schaft, wobei sich der Fuß im montierten Zustand der Lanze senkrecht zu einer Hauptströmungsrichtung des Brenners erstreckt, während sich der Schaft mittig im Brenner und wenigstens parallel zur Hauptströmungsrichtung erstreckt, wobei das Strömungshindernis stromauf der Lanze angeordnet ist.

Die Anforderungen an die Emissionen bei hohen Heissgastemperaturen und bei Teillastbetrieb sowie an die Flexibilität im Betriebsverhalten sind in den letzten Jahren gestiegen. Weiter werden neben Luft auch zunehmend Anlagen vorgeschlagen in denen weitere Oxidatorgase zur Verbrennung des Brennstoffes verwendet wird. Neben Luft kann ein Oxidatorgas beispielsweise ein durch Abgasrezirkulation gewonnenes Gasgemisch sein oder es kann beispielsweise ein sauerstoffhaltiges Produkt einer Luftzerlegungsanlage sein.

Es hat sich gezeigt, dass mit herkömmlichen Brennern und konventionellen Lanzen die NOx Emissionen bei steigenden Heissgastemperatur ohne grosse Einbussen bei den Teillastemissionen und im Pulsationsverhalten nicht auf einem tiefen Niveau gehalten werden können. Ohne weitere Optimierung reagieren die Brennstoffe bei den geforderten erhöhten Heissgastemperaturen mit dem Oxidatorgas, bevor eine ausreichende Durchmischung erfolgt, wodurch einerseits erhöhte Schadstoffemissionen feststellbar sind, und wodurch andererseits eine erhöhte Beschädigungsgefahr durch Flammrückschlag für den Brenner entsteht. Wird die Brennstoffeindüsung so optimiert, dass eine ausreichende Durchmischung für einen emissionsarmen Betrieb bei der maximalen Heissgastemperatur realisiert werden kann, so führt dies bei Teillastbetrieb zu extrem magerer Verbrennung mit hohen CO Emissionen. Ausserdem ist die Stabilität der Verbrennung schwer sicher zu stellen, was sich in schädlichen Brennkammerpulsationen äussern kann.

Eine ähnliche Problematik stellt sich auch bei der Verbrennung von Brennstoffen, die einen vergleichsweise hohen Anteil an Wasserstoffgas und Kohlenmonoxidgas enthalten. Derartige Brennstoffe, die beispielsweise durch eine partielle Oxidation herkömmlicher Kohlenwasserstoffe gebildet werden können, werden auch als Synthesegas oder Syngas bezeichnet. Derartige Brennstoffe zeichnen sich gegenüber herkömmlichen Brennstoffen durch eine signifikant erhöhte Reaktionsfreudigkeit aus. Wasserstoff und Kohlenmonoxid reagieren mit Sauerstoff sehr viel schneller und bereits bei niedrigeren Temperaturen als kohlewasserstoffhaltige Brennstoffe, wie beispielsweise Erdgas, so dass sich genau wie bei der oben angeführten Erhöhung der Heissgastemperatur die Brenngase vor einer ausreichende Durchmischung reagieren.

### Darstellung der Erfindung

Hier setzt die vorliegende Erfindung an. Die Erfindung hat zur Aufgabe, eine Lanze in einem damit ausgestatteten Brenner eine verbesserte Ausführungsform anzugeben, die eine stabile, pulsationsarme Verbrennung erlaubt und die auch bei durch erhöhte Heissgastemperatur oder ein Brenngas mit hohem Wasserstoff- und Kohlenmonoxidgehalt erhöhte Reaktionsgeschwindigkeiten eine gegen Flammrückschlag sichere und vergleichsweise NOx arme Verbrennung ermöglicht. Ferner müssen mit einer derartigen Lanze bei Teillast vergleichsweise geringe CO Schadstoffemissionen erzielbar sein. Ausserdem ist ein geeignetes Verfahren zum Betrieb einer derartigen Lanze anzugeben.

Erfindungsgemäss wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Brennstoff über eine Multipunkt- Einspritzung diskret verteilen zu können. Weiter sind die mindestens zwei Düsen so auszugestalten bzw. so anzuordnen, dass eine Haupteindüsrichtung der jeweiligen Düse bezüglich der Längsmittelachse des Schafts nicht (ausschliesslich) radial, sondern gegenüber der radialen Richtung geneigt ist, und zwar in Richtung einer im Brenner vorherrschenden Strömungsrichtung. Insbesondere kann die besagte Haupteindüsrichtung der jeweiligen Düse auch ausschliesslich axial, also koaxial zur Längsmittelachse des Schafts und somit parallel zur Hauptströmungsrichtung des Brenners orientiert sein. Durch diese Bauweise ist es beispielsweise möglich, das jeweilige Brennstoffgas zur Erhöhung der Rückschlagsicherheit mit einer höheren Geschwindigkeit in den Brenner einzuleiten, ohne dass der Brenngasstrahl in die langsame Grenzschicht einer Brennerwand eindringt, in der es aufgrund der langen Verweilzeiten vor dem Eintritt in die Brennkammer zu einer Reaktion kommen kann.

Entsprechend einer vorteilhaften Ausführungsform können mehrere Düsen vorgesehen sein, die jeweils an einem bezüglich einer Längsmittelachse des Schafts radial vom Schaft abstehenden Arm angeordnet sind. Derartige Arme können beispielsweise in der Umfangsrichtung gleichmässig verteilt am Schaft angeordnet sein. Zusätzlich kann eine Düse in der Längsmittelachse des Schafts in Strömungsrichtung vorgesehen sein. Die Länge der Arme kann unterschiedlich sein, so dass die Einspritzung gezielt in verschiedene Regionen des Brenners möglich ist. Der vorgeschlagene Brenner verfügt stromauf der Lanze über mindestens ein Strömungshindernis, dass mindestens ein Wirbelpaar in der Strömung erzeugt. Die Länge und Ausrichtung der Arme, an von denen über die Düsen Brennstoff in die Hauptströmung eingeleitet wird, ist so gewählt, dass ein stabiler emissionsarmer Betrieb gewährleistet wird.

Zur Realisierung tiefer NOx Emissionen bei hoher Heissgastemperatur ist eine gute Durchmischung von Brenngas und Hauptströmung erforderlich, was durch oben erwähnten die Wirbel gewährleistet wird. Um eine gegen Flammrückschlag sichere Verbrennung zu realisieren werden die Einspritzdüsen in die Zentren der Wirbel positioniert.

Zur Realisierung tiefer CO Emissionen bei Teillast mit stabiler pulsationsarmer Verbrennung kann eine lokal erhöhte Brennstoffkonzentration in Teilbereichen der Brennkammer vorteilhaft. Zu diesem Zweck können zusätzlich Einspritzdüsen in den Randbereichen der Wirbel positioniert werden.

Um einen optimalen Betrieb für alle Lasten zu ermöglichen, ist weiter eine Stufung bzw. Regelung der Brennstoffeindüsung in verschiedene Bereiche der Hauptströmung als Funktion der Last und der Brennstoffzusammensetzung vorgeschlagen. Bei tiefer Last wird der Brennstoff über mindestens eine Düse in den Randbereich mindestens eines Wirbels eingespritzt. Bei hoher Last wird Brennstoff über mindestens eine Düse in das Zentrum mindestens eines Wirbels eingespritzt. Während des Übergangs von tiefer Last zu hoher Last kann sowohl in den Randbereich mindestens eines Wirbels als auch in das Zentrum mindestens eines Wirbels eingespritzt werden. Je nach Brenngaszusammensetzung kann bei maximaler Last kann ein Teilmassenstrom des Brennstoffes weiter in den Randbereich mindestens eines Wirbels eingespritzt werden. Zur Optimierung des Emissions- und Pulsationsverhaltens können die Massenverhältnisse des über die verschieden Düsen bzw. Düsengruppen eingespritzten Brenngases variiert werden. Für Hochreaktive Brennstoffe sind instabile Verbrennung bei Teillast, insbesondere Löschpulsationen in der Regel kein Problem. Bei ihnen muss aber die Zufuhr von Brennstoff in Bereiche mit Rezirkulation oder reduzierter Strömungsgeschwindigkeit, wie die Nähe der Brennerwand, vermieden werden. Entsprechend kann die Brennstoffeindüsung in verschiedene Bereiche der Hauptströmung als Funktion der Reaktivität geregelt werden. Beispielsweise wird in die Wirbelzentren eingespritzte Brennstoffanteil mit zunehmender Reaktivität gesteigert und der in die Randbereiche eingespritzte Brennstoffanteil reduziert. Die Reaktivität ist typischerweise proportional zum Wasserstoffanteil des Brenngases.

Um den oben beschrieben, optimalen Betrieb der Brennkammer mit lastabhängiger Einspritzung in verschiedene Wirbelregionen durchführen zu können, kann eine getrennte Regelung des Brennstoffmassenstromes für die verschieden Düsen vorgesehen werden. Aus Kostengründen und um eine zu grosse Komplexität zu vermeiden, ist es sinnvoll verschiedene Düsen zu Gruppen zusammen zu fassen.

In einer Ausführung werden die Düsen zu zwei Gruppen zusammengefasst. Die erste Gruppe spritzt den Brennstoff in die Wirbelzentren ein, währen die zweite Gruppe die Düsen umfasst, die in die Randbereiche der Wirbel ein einspritzen.

Lanzen sind sowohl als Lanzen für den Betrieb mit Brenngas als auch für den sogenannten "Dual-Fuel" Betrieb, indem wahlweise Brenngas oder eine Flüssigkeit, typischerweise Öl, als Brennstoff verwendet wird, ausführbar. Bei Lanzen für den Dual-Fuel Betrieb erfolgt die Brennstoffeinspritzung über konzentrische Leitungen. Über die innerste Leitung wird Flüssigbrennstoff eingespritzt. Diese ist von der Brenngasleitung umgeben, die ihrerseits von einer Leitung mit sogenanntem Trägergas umschlossen ist. Das sogenannte Trägergas hat im wesentlichen zwei Funktionen. Zum einen kühlt es die Lanze inklusive Einspritzdüse, zum anderen bildet es einen ringförmigen kühlen Mantel um den Brennstoff, so dass dieser unter der Selbstzündtemperatur bleibt, bis er einen ausreichenden Abstand von der Düse hat, um einen Flammrückschlag zu verhindern. Bei dem Trägergas handelt es sich in der Regel um rückgekühlte Kühlluft. Die Gefahr eines Flammrückschlages kann aber durch die Verwendung von Inertgasen oder eines reaktionshemmenden Gases als Trägergas, reduziert werden. Je nach Brenngas und Betriebsbedingungen kann eine Zumischung von Inertgasen in die rückgekühlte Kühlluft für diesen Zweck ausreichen.

Der Flüssigbrennstoff oder eine Emulsion des Flüssigbrennstoffes in Wasser wird über an sich bekannte Düsen fein zerstäubt in die Hauptströmung eingespritzt. Bei Gasturbinen, die für den reinen Brenngasbetrieb vorgesehen sind, kann auf die Flüssigbrennstoffleitung und Düse verzichtet werden. Entsprechend kann dann mit nur zwei konzentrischen Leitungen zur Einspritzung von Brenngas und Trägergas gearbeitet werden.

Zur Regelung der Brennstoffmassenströme ist im Brennstoffverteilsystem oder in der Lanze selber mindestens ein Stellglied vorzusehen. Aus Platz- und Zugänglichkeitsgründen wird das Stellglied typischerweise in den Zuleitungen zu den Lanze angeordnet oder integriert. Als Stellglied wird beispielsweise ein Brennstoffkontrollventil verwendet. Um eine getrennte Regelung für die Einspritzung von Brenngasen in die Zentren der Wirbel und in die Randbereiche der Wirbel über die entsprechend positionierten Düsen zu realisieren, kann das Brennstoffverteilsystem in zwei entsprechende Zweige mit je einem eigenem Stellglied aufgeteilt werden.

Eine alternative Anordnung arbeite mit einem Stellglied, beispielsweise einem Regelventil, für die Regelung des Gesamtmassenstroms und mindestens einem Stellglied, dass den Massenstrom für die Brennstoffeinspritzung in die Randbereiche der Wirbel und/ oder und mindestens einem Stellglied, dass den Massenstrom für die Brennstoffeinspritzung in die Zentren der Wirbel zu- oder abschaltet. Diese Ausführungsform vereinfacht die Integration des Stellgliedes in die Lanze bzw. die Lanzenarme, da es nur eine einfache Auf- Zu- Funktion zu erfüllen hat und es kann mit einem einfacheren Brennstoffverteilsystem gearbeitet werden.

Als Stellglied für den Brennstoffmassenstrom kann dabei auch ein Vorgeschalteter Brenngaskompressor oder eine Kombination von Brenngaskompressor und Regelventil vorgesehen werden.

Eine weitere Ausgestaltung erlaubt darüber hinaus die Regelung der Trägergasmenge. Diese wird entweder als Gesamtmassenstrom geregelt oder in Abhängigkeit von dem durch die einzelnen Brenngasdüsen eingespritzten Brenngasstrom für die einzelnen Düsen oder Düsengruppen geregelt. Im Falle einer Regelung ist die Trägergasmenge beispielsweise proportional zur Brenngasmenge, wobei aber auch beim Abschalten einer Düse eine Mindestmenge Trägergas zur Kühlung durch die Lanze bzw. den Lanzenarm und die Düse fliesst.

Die Einspritzung von Brennstoff und Trägergas erfolgt in Strömungsrichtung oder mit einer Geschwindigkeitskomponente in Strömungsrichtung, um den Brennstoff aus dem Nachlauf oder Wirbel der Lanze in die Hauptströmung einzubringen.

Gemäss einer anderen vorteilhaften Ausführungsform können mehrere Düsen vorgesehen sein, die zur Erzeugung einer Mehrfach-Schichtströmung in einem Kernbereich der Brennstoffeindüsung angeordnet und ausgestaltet sind. Insbesondere können hierzu mindestens zwei Düsen vorgesehen sein, die so ausgestaltet sind, dass sie die jeweilige Brennstoffströmung entgegengesetzt mit Drall beaufschlagen. Entgegengesetzt rotierende Brennstoffströme können beispielsweise eine Mehrfach-Schichtströmung generieren. Auf diese Weise lässt sich eine weitere intensive Durchmischung zwischen Brennstoff und Oxidator zur Erzielung eines homogenen Brennstoff- Oxidator- Gemischs erreichen. Düsen zur Drallerzeugung können sowohl von den Armen der Lanze als auch vom Schaft Brennstoff und Trägergas einspritzen. Die stärke des Dralles ist bei hochreaktiven Brennstoffen durch die Gefahr eines Flammrückschlages beschränkt. Wenn ein ausreichend starker Gegendrall zur guten Durchmischung und Verbrennung durch mindestens ein paar Düsen am Schaftende erzeugt werden kann, kann auf die Anordnung der Arme verzichtet werden.

Eine weitere Möglichkeit einen flammrückschlagsicheren Betrieb für verschiedene Betriebsbedingungen und Brenngase sicher zu stellen, ist die Einführung eines Brenners mit variabler Lanzenposition oder mit geometrisch variabler Lanze. Die Vermischung von Brennstoff und Oxiadatorgas sowie die Sicherheit gegen Flammrückschlag ist wesentlich von dem Abstand zwischen Lanzenende und Brennerende abhängig. Einerseits wird mit wachsendem Abstand die Vermischung besser, andererseits steigt damit die Zündfähigkeit und es sinkt mit wachsendem Abstand die Strömungsgeschwindigkeit des Brenngases. Wenn beispielsweise bei hoher Last ein hoher Brenngasstrom mit entsprechend hoher Geschwindigkeit eingespritzt wird, kann eine sichere Verbrennung bei grossem Abstand zwischen Schaftende und Brennerende mit guter Durchmischung realisiert werden. Wenn im Gegensatz dazu bei tiefer Last ein kleinerer Brenngasmassenstrom mit entsprechend tiefer Geschwindigkeit eingespritzt wird, wird für eine sichere Verbrennung der Abstand zwischen Schaftende und Brennerende reduziert. Dies Stellt sicher, dass die Brenngasgeschwindigkeit im Brenner ausreichend hoch bleibt, um einen Flammrückschlag zu verhindern. Ausserdem wird die Mischstrecke kürzer und die Brennstoffkonzentration bleibt lokal höher, wodurch die Verbrennung bei dem magern Teillastbetrieb stabilisiert wird.

Um einen derartigen variablen Abstand zwischen Schaftende und Brennerende zu realisieren, wird entweder die Position des Lanzenfusses im Betrieb in Axialer Richtung mit einer entsprechenden Verstelleinrichtung verstellt oder die Schaftlänge der Lanze variiert. Dafür kann diese beispielsweise diese teleskopartig ausfahrbar ausgeführt sein. Eine Kombination beider Verstellmechanismen ist ebenfalls möglich. Mit der Position des Schaftendes kann auch die Position von an dem Schaft über Arme befestigter Düsen variiert werden.

Weiter ist eine Kombination der geregelten Einspritzung in verschiedene Bereiche des Brenners mit einer Regelung der Position des Schaftendes möglich.

Die Regelung der Brenngasverteilung auf primären Brenngasstrom und sekundären Brenngasstrom sowie die Regelung der Position des Schaftendes kann in Abhängigkeit von verschieden Betriebsparameter der Gasturbine erfolgen. Ein auch für die Last der Brennkammer repräsentativer Parameter ist beispielsweise die relative Last der Gasturbine, d.h. der Quotient aus augenblicklich abgegebener Leistung und Volllastleistung. Weitere mögliche Parameter sind beispielsweise eine Prozessobertemperatur wie die Heissgastemperatur oder die Turbineneintrittstemperatur, die unmittelbar die Belastung der Brennkammer beschreiben. Weiter ist die Stellung mindestens einer variablen Vorleitreihe des Verdichter, mit der der Ansaugmassenstrom und damit auch der Massenstrom durch die Brennkammer geregelt wird ein wichtiger Parameter. Entsprechend kann die Regelung auch in Abhängigkeit von der Brenngasmenge ausgeführt werden. Weiter ist beispielsweise eine Regelung in Abhängigkeit der Turbinenaustrittstemperatur oder des Brennkammerdruckes realisierbar. Die Regelung ist dabei nicht nur in Abhängigkeit eines Parameters durchführbar, sondern auch als Funktion einer Kombination von Parametern.

Weitere wichtige Vorteile und Merkmale der vorliegenden Erfindung ergeben sich aus den Unteransprüchen, aus den Zeichnungen und aus den zugehörigen Figurenbeschreibungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen. Es zeigen, jeweils schematisch,
- Fig. 1: einen stark vereinfachten Längsschnitt durch einen Brenner mit einer Lanze,
- Fig. 2: eine stark vereinfachte perspektivische Darstellung einer Ausführungsform einer Lanze vier Armen zur Brennstoffeinspritzung,
- Fig. 3: eine stark vereinfachte perspektivische Darstellung einer Ausführungsform einer Lanze mit kurzen und langen Armen zur Brennstoffeinspritzung,
- Fig. 4: eine axiale Ansicht (IV aus Fig. 3) auf eine Anordnung der Arme im Brenner bei der die kurzen und langen Arme in axialer Richtung hinter einander angeordnet sind,
- Fig. 5: eine axiale Ansicht (V aus Fig. 3) auf eine Anordnung der Arme im Brenner bei der die kurzen Arme relativ zu den langen Armen in axialer Richtung um 45° verdreht zueinander angeordnet sind,
- Fig. 6: eine axiale Ansicht auf die Anordnung der Brenner mit dem zugehörigen Brennstoffverteilsystem vor einer Ringbrennkammer,
- Fig. 7: einen Längsschnitt durch Schaft und Arme einer Lanze zur Darstellung der Brennstoff- und Trägergasverteilung,
- Fig. 8: einen Querschnitt A-A durch den Schaft und die kurzen Arme einer Lanze zur Darstellung der Brennstoff- und Trägergasverteilung,
- Fig. 9: einen Querschnitt B-B durch den Schaft und die langen Arme einer Lanze zur Darstellung der Brennstoff- und Trägergasverteilung.

### Wege zur Ausführung der Erfindung

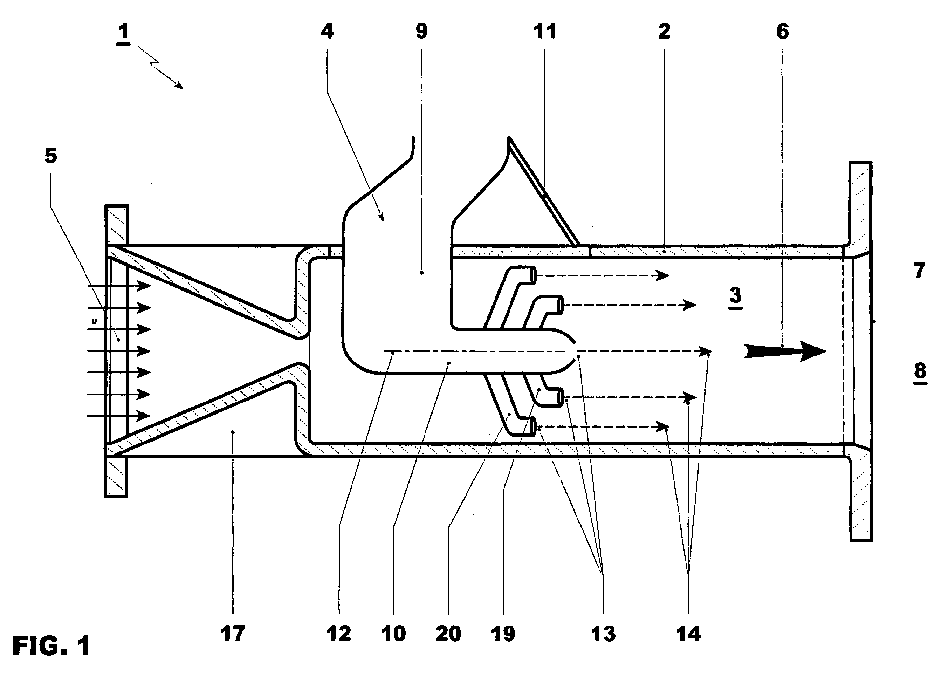

Entsprechend Fig. 1 umfasst ein Brenner 1 eine Brennerwand 2, die einen Mischraum 3 des Brenners 1 umhüllt. Vorzugsweise bildet der Brenner 1 einen Bestandteil einer hier im übrigen nicht dargestellten Brennkammer einer Gasturbinenanlage. Der Brenner 1 ist mit einer Lanze 4 ausgestattet, mit deren Hilfe ein gasförmiger oder flüssiger Brennstoff in den Brenner 1 eingeleitet werden kann.

Der Brenner 1 weist eine Eingangsseite 5 auf, durch die ein Oxidatorgas, wie z.B. Luft, in den Mischraum 3 eintritt. Die Oxidatorgasströmung besitzt im Brenner 1 eine durch einen Pfeil angedeutete Hauptströmungsrichtung 6, die sich parallel zu einer Längsachse des Brenners 1 erstreckt. Um eine schnelle Vermischung von Brennstoff und Oxidatorgas zu gewährleisten ist im Eingangsbereich des Brenners 1 mindestens ein Wirbelgenerator 17 angeordnet. Ferner weist der Brenner 1 eine Ausgangsseite 7 auf, durch die das Oxidatorgas, gegebenenfalls angereichert mit Brennstoffgas, das über die Lanze 4 eingebracht wird, aus dem Gemischraum 3 austritt und beispielsweise in einen Brennraum 8 der Brennkammer eintritt.

Die Lanze 4 weist einen Fuss 9 auf sowie einen Schaft 10. Der Fuss 9 durchsetzt die Brennerwand 2 und ist mit einem Flansch 11 an der Brennerwand 2 aussen befestigt. Die Brennerwand 2 kann ausserdem eine verschliessbare Ausnehmung 16 aufweisen, durch die die Lanze 4 in den Brenner 1 eingesetzt werden kann. Der Fuss 9 erstreckt sich im Brenner 1 im wesentlichen senkrecht zur Hauptströmungsrichtung 6. Der Schaft 10 besitzt einen zylindrischen Körper und steht vom Fuss 9 in etwa rechtwinklig ab. Im gezeigten montierten Zustand erstreckt sich der Schaft 10 mittig im Brenner 1 sowie parallel zur Hauptströmungsrichtung 6. Dementsprechend verläuft eine Längsmittelachse 12 des Schafts 10 wenigstens annähernd parallel zur Hauptströmungsrichtung 6 des Brenners 1. Entsprechend Fig. 1 können bei der Lanze 4 mehrere Arme 19 und 20 zur Verteilung des Brennstoffes in verschiedene Bereiche des Brenners 1 vorgesehen sein.

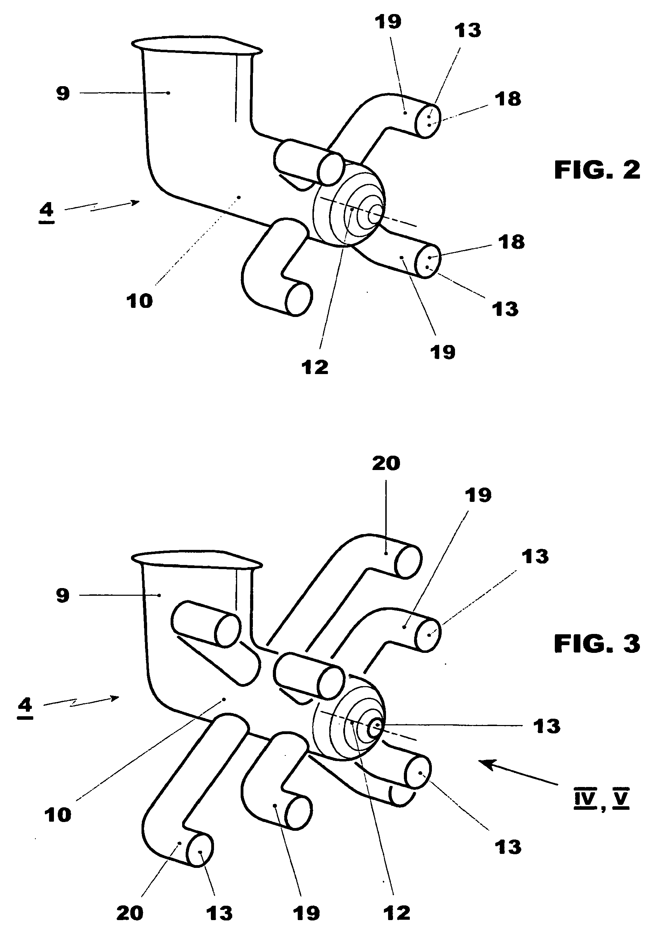

Entsprechend Fig. 2 können bei einer Ausführungsform der Lanze 4 vier Düsen 13 vorgesehen sein. Bei dieser Ausführungsform ist für jede Düse 13 am Schaft 10 ein Arm 19 vorgesehen. Der jeweilige Arm 19 steht bezüglich der Längsmittelachse 12 des Schafts 10 radial vom Schaft 10 ab. Dabei kann der Arm 19, wie hier dargestellt, abgewinkelt sein. Seine Längsrichtung kann auch eine parallel zur Längsmittelachse 12 verlaufende Komponente enthalten, also gegenüber der reinen Radialrichtung geneigt sein. Jedenfalls können die jeweilige Düse 13 parallel zur Hauptströmungsrichtung 6 ausgerichtet sein, so dass die Haupteindüsrichtung 14 der jeweiligen Düse 13 parallel zur Längsmittelachse 12 des Schafts 10 und somit parallel zur Hauptströmungsrichtung 6 des Brenners 1 verläuft.

Vorzugsweise sind die Arme 19 in der Umfangsrichtung gleichmässig am Schaft 10 verteilt angeordnet. Entsprechend der in Fig. 2 gezeigten Ausführungsform wird dabei eine Konfiguration bevorzugt, bei welcher im direkten Nachlauf des Fusses 9 kein Arm 19 angeordnet ist, bei welchem stattdessen der Fuss 9 in axialer Richtung etwa mittig zwischen zwei Armen 19 positioniert ist. Ferner sind die Düsen 13 - je nach Geometrie des Brenners 1 bzw. des Gemischraums 3 - jeweils gleich weit von der Längsmittelachse 12 des Schafts 10 radial beabstandet. Die bezüglich der Längsmittelachse 12 realisierte exzentrische Anordnung der jeweiligen Düsen 13 ermöglicht es, die Spritzkegel der einzelnen Düsen 13 mit kleineren Kegelwinkeln auszustatten, was die Durchmischung zwischen Brennstoff und Oxidator vor der Zündung verbessert.

Eine Beispielhafte Ausführung einer Lanze mit langen Armen 20 zum Einbringen von Brennstoff in die Randzonen des Brenners und kurzen Armen 19 zum Einbringen von Brennstoff in die Zentren von Wirbeln im Brenner 1 ist in Fig. 3 perspektivisch dargestellt. Um den Brennstoff, bei dem es sich beispielsweise um Erdgas oder um ein Wasserstoffgas oder ggf. Kohlenmonoxidgas enthaltendes Brenngas 18 handeln kann, in den Brenner 1 bzw. in dessen Gemischraum 3 einleiten zu können, weisen die kurzen Arme 19 und langen Arme 20 sowie der Schaft 10 zumindest eine Düse 13 auf. Diese mindestens eine Düse 13 ist dabei so ausgestaltet bzw. so am Schaft 10 angeordnet, dass sie eine in Richtung zur Hauptströmungsrichtung 6 geneigte Haupteindüsrichtung 14 aufweist. Die Haupteindüsrichtung 14 ist dabei diejenige Richtung, mit welcher die jeweilige Düse 13 den Brennstoff in den Brenner 1 einleitet. Bei einem in der Regel kegelförmigen Einspritzstrahl entspricht diese Haupteindüsrichtung 14 der Längsmittelachse des jeweiligen Spritzkegels.

Die mindestens eine Düse 13 kann an dem jeweils stirnseitigen axialen, abströmseitigen Schaftende 15 bzw. der abströmseitigen Enden der Arme 19 und 20 angeordnet sein. Hierdurch kann insbesondere die in Fig. 1 angedeutete axiale Orientierung für die Haupteindüsrichtung 14 besonders einfach realisiert werden. Entsprechend Fig. 3 können bei der Lanze 4 mehrere Arme 19 und 20 zur Verteilung des Brennstoffes vorgesehen sein. Im Beispiel sind je vier Düsen 13 an je einem kurzen Arm 19 und vier Düsen 13 an je einem langen Arm 20 vorgesehen. Der jeweilige Arm 19, 20 steht bezüglich der Längsmittelachse 12 des Schafts 10 radial vom Schaft 10 ab. Dabei können die kurzen Arme 19 und langen Arme 20, wie hier dargestellt, abgewinkelt sein. Ihre Längsrichtung kann auch eine parallel zur Längsmittelachse 12 verlaufende Komponente enthalten, also gegenüber der reinen Radialrichtung geneigt sein. Jedenfalls weist jede Düse 13 in axiale Richtung. Die Düsen 13 bringen somit den Brennstoff mit einer Haupteindüsrichtung 14 in die Oxidatorgasströmung ein, die parallel zur Längsmittelachse des Brenners 1 und somit parallel zur Hauptströmungsrichtung 6 des Brenners 1 verläuft.

Vorzugsweise sind die kurzen Arme 19 und langen Arme 20 in der Umfangsrichtung gleichmässig am Schaft 10 verteilt angeordnet. Entsprechend der in Fig. 3 gezeigten Ausführungsform wird dabei eine Konfiguration bevorzugt, bei welcher im direkten Nachlauf des Fusses 9 kein Arm 19, 20 angeordnet ist, bei welcher stattdessen der Fuss 9 in axialer Richtung etwa mittig zwischen zwei kurzen Armen 19 bzw. zwei langen Armen 20 positioniert ist. Ferner sind die langen Arme 20 stromauf der kurzen Arme 19 positioniert, damit alle Arme in einer brennstofffreien Oxidatorgasströmung stehen.

Die bezüglich der Längsmittelachse 12 realisierte exzentrische Anordnung der jeweiligen Düsen 13 ermöglicht es, die Spritzkegel der einzelnen Düsen 13 mit kleineren Kegelwinkeln auszustatten, was die Durchmischung zwischen Brennstoff und Oxidator vor der Zündung verbessert.

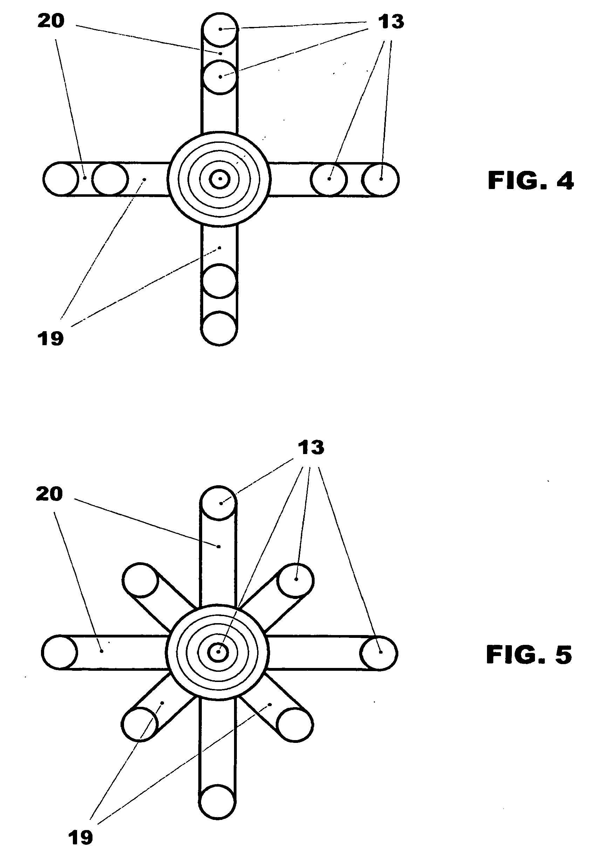

Für die Anordnung und Ausrichtung der Arme 19, 20 der in Fig. 2 und Fig. 3 gezeigten Konfigurationen gibt es eine Vielzahl von Möglichkeiten. Zwei Beispiele für Ausrichtungen für Kombination von kurzen und langen Armen 19, 20 entsprechend Fig. 3 sind in Fig. 4 und Fig. 5 in axialer Ansicht dargestellt. In dem Beispiel der Fig. 4 sind die kurzen Arme 19 und langen Arme 20 in axialer Richtung hinter einander angeordnet sind.

Eine alternative Anordnung ist in Fig. 5 ebenfalls in axiale Ansicht gezeigt. Hier sind die kurzen Arme 19 relativ zu den langen Armen 20 in axialer Richtung um 45° verdreht zueinander angeordnet.

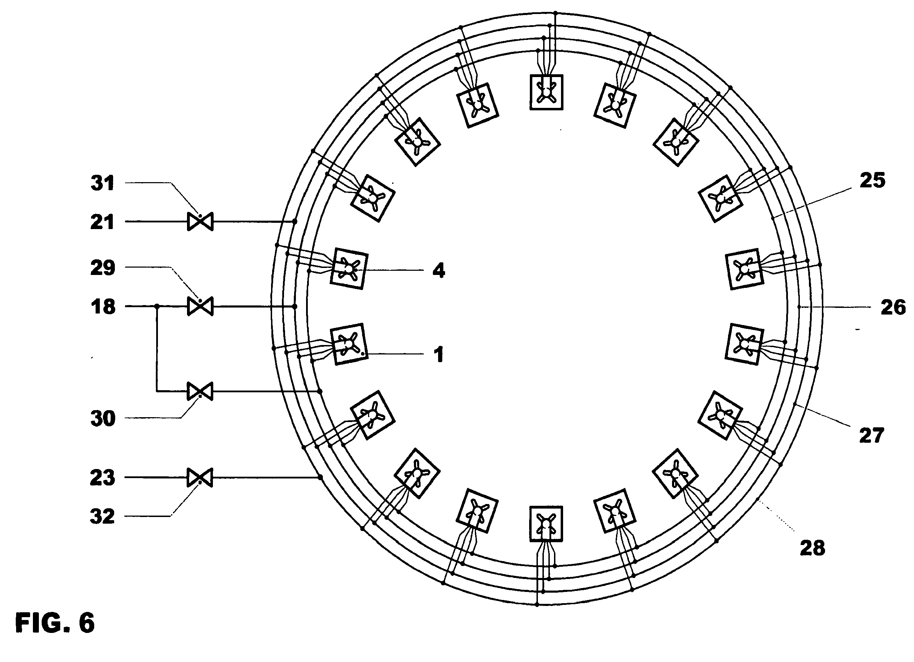

In Fig. 6 ist eine axiale Ansicht auf eine Beispielhafte Anordnung der Brenner mit einem zugehörigen Brennstoffverteilsystem stromauf vor einer Ringbrennkammer schematisch dargestellt. Bei dem gezeigten Beispiel handelt es sich um eine Anordnung für Dual Fuel Betrieb, dass heisst es gibt ein Brennstoffsystem für Brenngas und Flüssigbrennstoff. Der Flüssigbrennstoff 21 wird über das Regelventil 31 in das Flüssigbrennstoff- Distributionssystem 27 eingeleitet. Dies ist als Ringleitung um die Brenner ausgeführt. Von dieser Ringleitung gehen Stichleitungen zu den einzelnen Brennern 1, durch die diese mit dem Flüssigbrennstoff versorgt werden. In dem gezeigten Beispiel wird davon Ausgegangen, dass der Brenner mit Öl trocken, d.h. ohne Zumischung von Wasser zur Reduktion der NOx Emissionen betrieben werden kann oder bereits stromauf des Regelventils 31 eine Öl- Wasseremulsion zur Einspritzung in die Brenner 1 erzeugt wurde. Je nach Brennerbauart wird eine Öl- Wasseremulsion erst im Brenner 1 oder unmittelbar am Brenner 1 erzeugt. Dann kann es notwendig sein eine separate Wasserzuleitung zu den einzelnen Brennern vorzusehen.

Das Brenngas 18 wird aufgeteilt und über ein Regelventil für den primären Brenngasstrom 29 und über ein Regelventil für den sekundären Brenngasstrom 30 in das primäre Brenngas- Distributionssystem 25 und das sekundäre BrenngasDistributionssystem 26 geleitet. Die beiden Brenngas- Distributionssystem sind als Ringleitung um die Brenner ausgeführt, von denen jeweils Stichleitungen zu den einzelnen Brennern 1 führen. Die Aufteilung erlaubt es jeden Brenner mit zwei Regelbaren Brenngasströmen zu versorgen und damit die Brenngasverteilung innerhalb der Brenner 1 entsprechend den Betriebsbedingungen anzupassen.

Dabei wird das primäre Brenngas 33 über das Regelventil für den primären Brenngasstrom 29 geregelt in das primäre Brenngas- Distributionssystem 25 und die kurzen Arme 19 der Lanzen 4 in Wirbelzentren der Brenner 1 eingebracht. Analog wird der sekundäre Brenngasstrom 34 über das Regelventil für den sekundären Brenngasstrom 30 geregelt in das sekundäre BrenngasDistributionssystem 26 und die langen Arme 20 der Lanzen 4 in die Aussenbereiche der Brenner 1 eingebracht. Entsprechend des Betriebspunktes kann der gesamte Brenngasstrom über die langen Arme 20 oder über die kurzen Arme 19 oder in einem beliebigen Verhältnis eingebracht werden.

Sowohl für den Betrieb mit Flüssigbrennstoff 21 als auch für den Betrieb mit Brenngas 18 ist in dem gezeigten Beispiel eine Kühlung der Lanze 4 mit Trägergas erforderlich. Ausserdem ist in dem Beispiel das Trägergas 22 zur Umhüllung des Brennstoffes bei der Einspritzung in die Oxidatorgasströmung erforderlich. Das Trägergas 22 wird über das Regelventil für Trägergas 32 und das Trägergas- Distributionssystem 28, bestehend aus einer Ringleitung und Stichleitungen zu den einzelnen Brennern 1, in die kurzen Arme 19 sowie die langen Arme 20 der Lanzen 4 in die Brenner 1 eingebracht. In dem gezeigten Beispiel kann der Gesamtmassenstrom des Trägergases über das Trägergas-Regelventil 22 entsprechend den Betriebsbedingungen geregelt werden. In einer weiteren möglichen Ausführung kann das Trägergas- Distributionssystem aufgeteilt werden und mit zwei Regelventilen und Ringleitungen ausgeführt werden. Analog zu dem dargestellten Brenngas- Distributionssystemen kann dann das Trägergas 22 geregelt über die kurzen Armen 19 und die langen Armen 20 der Lanzen 4 in die Brenner 1 eingeleitet werden.

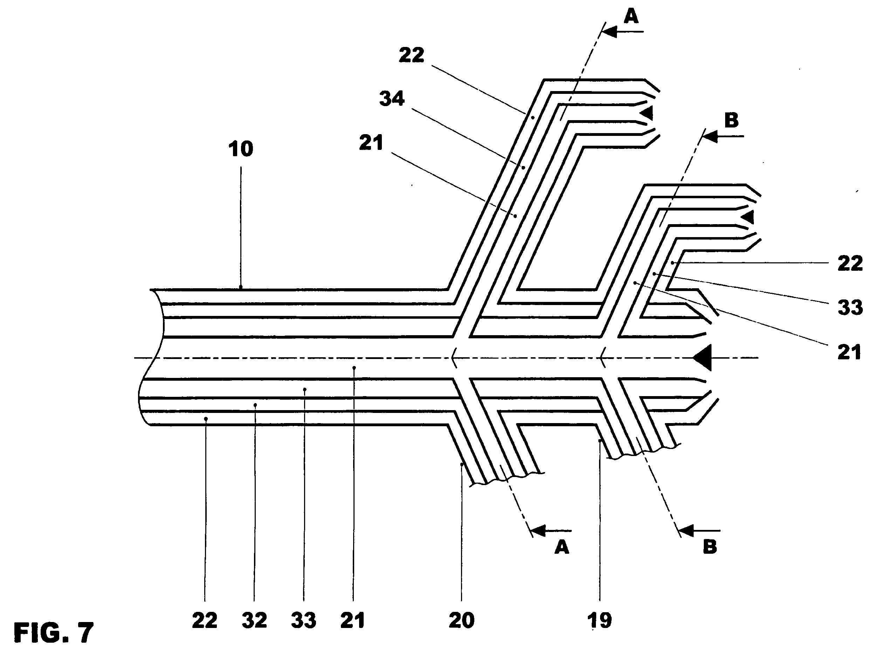

In den Fig. 7 bis 9 ist die Brennstoffverteilung in den Lanzen 4 bzw. den Armen der Lanzen 4 schematisch dargestellt.

Fig. 7 zeigt schematisch den Schnitt durch den Schaft 10 einer Lanze 4 mit vier kurzen Armen 19 und vier langen Armen 20. Der Schaft 10 und die Arme sind aus konzentrische angeordneten Rohren aufgebaut. Durch das jeweils innerste Rohr kann der Flüssigbrennstoff zu den Brennstoffdüsen 13 gefördert werden. Durch das jeweils äusserste Rohr kann das Trägergas zu den Brennstoffdüsen 13 gefördert werden.

Das zweitinnerste Rohr des Schaftes 10 ist für die Leitung des primären Brenngases zu den kurzen Armen 19 und zu der zentral am Ende des Schafts 10 angeordnete Düse 13 vorgesehen. Das drittinnerste Rohr des Schaftes 10 ist für die Leitung des sekundären Brenngases zu den langen Armen 20 vorgesehen.

In den langen Armen 20 kann das sekundäre Brenngas 34 über das zweitinnerste Rohr der langen Armen 20 zu den Düsen 13 am den Enden der Arme geleitet werden.

Entsprechend kann in den kurzen Armen 19 das primäre Brenngas 34 über das zweitinnerste Rohr der kurzen Armen 19 zu den Düsen 13 an den Ende der Arme geleitet werden.

Das zweitinnerste Rohr des Schaftes 10 ist für die Einspritzung des primären Brenngases über Düsen 13 an den Enden der kurzen Arme 19 und die zentral am Ende des Schafts 10 angeordnete Düse 13 vorgesehen. Das drittinnerste Rohr ist für die Einspritzung des sekundären Brenngases über Düsen 13 an den Enden der langen Arme 20 vorgesehen.

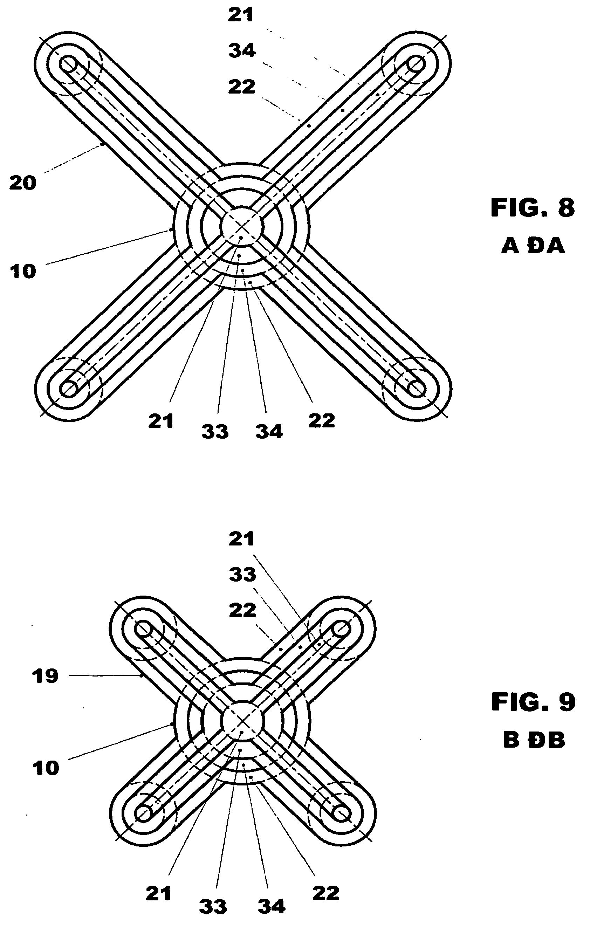

In Fig. 8 wird anhand des Schnitts A-A aus Fig. 7 die Einleitung der Brennstoffe und des Trägergases aus dem Schaft 10 in die langen Arme 20 dargestellt. Der Flüssigbrennstoff 21 wird aus dem innersten Rohr des Schafts 10 in das innerste Rohr des langen Arms 20 geleitet. Das sekundäre Brenngas 34 wird von dem drittinnersten Rohr des Schaftes 10 in das jeweils zweitinnerste Rohr der langen Arme 20 geleitet. Das Trägergas 22 fliesst vom äussersten Rohr des Schaftes 10 in das jeweils äusserste Rohr der langen Arme 20. Es bestehen keine Verbindungen vom zweitinnersten Rohr des Schaftes zu den langen Armen 20.

In Fig. 9 wird anhand des Schnitts B-B aus Fig. 7 die Einleitung der Brennstoffe und des Trägergases aus dem Schaft 10 in die kurzen Arme 19 dargestellt. Der Flüssigbrennstoff 21 wird aus dem innersten Rohr des Schafts 10 in das innerste Rohr des kurzen Arms 19 geleitet. Das primäre Brenngas 33 wird von dem zweitinnersten Rohr des Schaftes 10 in das jeweils zweitinnerste Rohr der kurzen Arme 19 geleitet. Das Trägergas 22 fliesst vom äussersten Rohr des Schaftes 10 in das jeweils äusserste Rohr der kurzen Arme 19. Es bestehen keine Verbindungen vom drittinnersten Rohr des Schaftes zu dem kurzen Armen 19.

Die Ausführungen und möglichen Betriebsweisen sind nicht auf die hier gezeigten Beispiele beschränkt. Sie können in verschiedener Art kombiniert oder erweitert werden. Beispielsweise ist eine andere Anordnung der Brennstoffzuführung, in der nicht vier ineinander koaxiale Rohre zum Aufbau des Schafts (10) verwendet werden, sondern kann ein Rohr mit kreuzförmig angeordneten Trennwänden, welche die Querschnittsfläche des Rohres in vier Sektoren teilt, zum Aufbau des Schaftes verwendet werden.

Eine weitere Alternative kann beispielsweise eine Lanze mit Armen sein, bei der über die Arme nur Brenngas eingespritzt wird und der Flüssigbrennstoff (21) nur über die mindestens eine Düse am Schaftende (15) eingespritzt wird. Weiter ist eine Lanze für den reinen Brenngasbetrieb ganz ohne Flüssigbrennstoff- (21) Einspritzung denkbar.

In weiteren Ausführungen kann beispielsweise auch während des Brenngasbetriebs auf Trägergas verzichtet werden und dadurch der Aufbau der Lanze vereinfacht werden. Weiter ist dann denkbar beim Flüssigbrennstoffbetrieb die Brenngasleitung zur Einleitung eines Trägergases benutzt wird.

Eine weitere Ausführung sieht beispielsweise noch eine zusätzliche Brenngaszuführung in die Lanze 4 vor, durch die ein Erdgas herkömmlich, wie z.B. in der EP1030109 offenbart, radial vom Schaft 10 in die Oxiddatorströmung einspritzt. Mit einem entsprechend erweiterten Brenngasverteilsystem, dass die geregelte Brenngaszuführung erlaubt, ermöglicht dies die optimierte Einleitung von zwei verschiedenen Brenngasarten.

### Bezugszeichenliste

- 1: Brenner
- 2: Brennerwand
- 3: Mischraum
- 4: Lanze
- 5: Eintrittsseite
- 6: Hauptströmungsrichtung
- 7: Austrittsseite
- 8: Brennraum
- 9: Fuss von 4
- 10: Schaft von 4
- 11: Flansch
- 12: Längsmittelachse von 10
- 13: Düsen
- 14: Haupteindüsrichtung
- 15: Schaftende
- 16: Ausnehmung
- 17: Wirbelgenerator
- 18: Brenngas
- 19: kurzer Arm
- 20: langer Arm
- 21: Flüssigbrennstoff
- 22: Trägergas
- 23: Abstand
- 24:
- 25: primäres Brenngasdistributionssystem
- 26: sekundäres Brenngasdistributionssystem
- 27: Flüssigbrennstoff- Distributionssystem
- 28: Trägergas- Distributionssystem
- 29: Regelventil für primären Brenngasstrom
- 30: Regelventil für sekundären Brenngasstrom
- 31: Regelventil für Flüssigbrennstoff
- 32: Regelventil für Trägergas
- 33: primärer Brenngasstrom
- 34: sekundärer Brenngasstrom

## Patentansprüche

1. Brenner (1) einer Brennkammer einer Gasturbinenanlage mit sequentieller Verbrennung, welche eine erste und eine zweite Brennkammer aufweist, umfassend ein Strömungshindernis, dass im Betrieb mindestens ein Wirbelpaar in der Strömung erzeugt und eine Lanze (4) zum Einbringen von gasförmigem und/ oder flüssigen Brennstoff mit einem Fuss (9) und einem davon abstehenden Schaft (10), wobei sich der Fuss (9) im montierten Zustand der Lanze (4) senkrecht oder geneigt zu einer Haüptströmungsrichtung (6) des Brenners (1) erstreckt, während sich der Schaft (10) mittig im Brenner (1) und wenigstens annähernd parallel zur Hauptströmungsrichtung (6) erstreckt, wobei von dem Schaft ausgehend mindestens ein abstehender Arm (19, 20) mit mindestens je einer Düse (13) zum Einleiten von Brennstoff angeordnet ist, wobei das jeweilige Ende des mindestens einen Arms in Hauptströmungsrichtung ausgerichtet ist und sich wenigstens annähernd parallel zur Hauptströmungsrichtung (6) erstreckt und, wobei das Strömungshindernis stromauf der Lanze (4) angeordnet ist.

2. Brenner (1) nach Anspruch 1, wobei durch die Lanze (4) mindestens eine Leitung für Trägergas (22), zur Kühlung der Lanze und/ oder Versorgung der mindestens einen Düse (13) aufweist.

3. Brenner (1) nach Anspruch 1 oder 2, wobei jeweils mindestens eine Düse (13) an dem jeweiligen Ende des mindestens einen Arms (19, 20) in die Hauptströmungsrichtung (6) des Brenners (1) weist.

4. Brenner (1) nach einem der Ansprüche 1 bis 3, wobei der mindestens eine Arm (19, 20) der Lanze (4) von dem Schaft (10) ausgehend radial absteht.

5. Brenner (1) nach einem der Ansprüche 1 bis 4, wobei der Schaft (10) der Lanze (4) mindestens eine Düse (13) zum Einleiten von Brennstoff in den Brenner (1) aufweist.

6. Brenner (1) nach einem der Ansprüche 1 bis 5, wobei die mindestens eine am Schaft (10) der Lanze (4) angeordnete Düse (13) am stirnseitigen axialen Schaftende (15) angeordnet ist.

7. Brenner (1) nach einem der Ansprüche 1 bis 6, wobei in die Lanze (4) mindestens eine Leitung für Brenngas (18) und eine Leitung für Trägergas (22) zur Versorgung der Düsen (13) integriert ist.

8. Brenner (1) nach einem der Ansprüche 1 bis 7, wobei in die Lanze (4) mindestens eine Leitung für einen primären Brenngasstrom (33) und mindestens eine Leitung für einen sekundären Brenngasstrom (34) zur geregelten Verteilung des Brenngases in den Brenner (1) integriert ist.

9. Brenner (1) nach einem der Ansprüche 7 oder 8, wobei in die Lanze (4) zusätzlich mindestens eine Leitung für Flüssigbrennstoff (21) zur Versorgung mindestens einer Düse (13) integriert ist.

10. Brenner (1) nach Anspruch 9, wobei in die Lanze (4) die Leitung für Flüssigbrennstoff (21) nur zur Versorgung mindestens einer stirnseitig am axialen Schaftende (15) angeordneten Düse (13) integriert ist und nur diese als Düse für Flüssigbrennstoff ausgeführt ist.

11. Brenner (1) nach einem der Ansprüche 1 bis 10, wobei die Position der Düsen (13) der Lanze (4) auf, durch stromauf gelegene Wirbelgeneratoren (17) erzeugte, sich in dem Brenner (1) ausbildende Wirbel abgestimmt ist.

12. Brenner (1) nach einem der Ansprüche 1 bis 11, wobei die Lanze (4) mindestens einen kurzen Arm (19) aufweist, der so weit in die Strömung hineinreicht, dass die jeweils an ihrem jeweiligen Ende befindliche mindestens eine Düse (13) einen primären Brenngasstrom (33) In das Zentrum eines, durch einen stromauf gelegenen Wirbelgenerator (17) erzeugten, Wirbels einspritzt.

13. Brenner (1) nach einem der Ansprüche 1 bis 12, wobei die Lanze (4) mindestens einen langen Arm (20) aufweist, der so weit in die Strömung hineinreicht, dass die jeweils an ihrem Ende befindliche mindestens eine Düse einen (13) sekundären Brenngasstrom (34) in einen Randbereich eines, durch einen stromauf gelegenen Wirbelgenerator (17) erzeugten, Wirbels einspritzt.

14. Brenner (1) nach einem der Ansprüche 1 bis 13, wobei mindestens jeweils zwei benachbarte Düsen (13) zur Einspritzung von Brenngas (18, 33, 34) und/ oder Trägergas (22) mit einem Gegendrall ausgebildet sind.

15. Brenner (1) nach einem der Ansprüche 1 bis 14, wobei am stirnseitigen axialen Ende (15) des Schaftes (10) mindestens ein paar Düsen (13) angeordnet sind, und wobei diese Düsen (13) zur Einspritzung von Brenngas (18, 33, 34) und/ oder Trägergas (22) mit einem Gegendrall ausgebildet sind.

16. Brenner (1) nach einem der Ansprüche 1 bis 15, wobei in ihren Schaft (10) eine weitere Brennstoffzuführung Integriert ist, und wobei über sie von dem Schaft (10) ausgehend radial in die Hauptströmung eine zweite Brenngasart eingedüst werden kann.

17. Verfahren zum Betrieb einer Gasturbine mit mindestens einer Ringbrennkammer bestehend aus mindestens einem Brenner (1) nach einem der Ansprüche 1 bis 16 und einem sich an die Austrittsseite des Brenners (1) anschliessenden Brennraum, wobei die Brennstoffeindüsung in verschiedene Bereiche einer Hauptströmung des Brenners (1) als Funktion der Last und der Brennstoffzusammensetzung gestuft oder geregelt wird.

18. Verfahren nach Anspruch 17, wobei der Anteil von primärem Brenngasstrom (33) zu sekundärem Brenngasstrom (34) als Funktion eines anderen Betriebsparameters der Gasturbine geregelt wird.

19. Verfahren nach Anspruch 17 oder 18, wobei wenigstens ein Teil des Brenngases (18) bei tiefer Last über den mindestens über den mindestens einen langen Arm (20) der Lanze (4) in einen Randbereich des Brenners (1) geleitet wird.

20. Verfahren nach Anspruch 18 oder 19, wobei mehr als die Hälfte des Brenngases (18) bei hoher Last als primärer Brenngasstrom (33) über den mindestens einen kurzen Arm (19) der Lanze (4) in das Zentrum mindestens eines Wirbels im Brenners (1) geleitet wird.

21. Verfahren nach einem der Ansprüche 19 bis 20, wobei die Brennstoffverteilung im Brenner in Abhängigkeit von der Reaktivität des Brenngases geregelt wird.

## Claims

1. Burner (1) of a combustion chamber of a gas turbine installation with sequential combustion, which has a first and a second combustion chamber, comprising a flow obstacle which during operation creates at least one vortex pair in the flow and a lance (4) for introducing gaseous and/or liquid fuel with a foot (9) and a shank (10) which projects from it, wherein in the installed state of the lance (4) the foot (9) extends perpendicularly or at an angle to a main flow direction (6) of the burner (1), whereas the shank (10) extends centrally in the burner (1) and at least approximately parallel to the main flow direction (6), wherein at least one projecting arm (19, 20), with at least one nozzle (13) for introducing fuel in each case, is arranged in a manner in which it extends from the shank, wherein the respective end of the at least one arm is oriented in the main flow direction and extends at least approximately parallel to the main flow direction (6), and wherein the flow obstacle is arranged upstream of the lance (4).

2. Burner (1) according to Claim 1, wherein the lance (4) has at least one pipe for carrier gas (22), for cooling the lance and/or for the supply of the at least one nozzle (13).

3. Burner (1) according to either of Claims 1 or 2, wherein the lance (4) at least one nozzle (13) in each case at the respective end of the at least one arm (19, 20) points in the main flow direction (6) of the burner (1).

4. Burner (1) according to one of Claims 1 to 3, wherein the at least one arm (19, 20) of the lance (4) projects radially from the shank (10).

5. Burner (1) according to one of Claims 1 to 4, wherein the shank (10) of the lance (4) has at least one nozzle (13) for introducing fuel into the burner (1).

6. Burner (1) according to one of Claims 1 to 5, wherein the at least one nozzle (13), which is arranged on the shank (10) of the lance (4), is arranged on the end-face axial shank end (15).

7. Burner (1) according to one of Claims 1 to 6, wherein at least one pipe for combustible gas (18) and a pipe for carrier gas (22) for the supply of the nozzles (13) are integrated into the lance (4).

8. Burner (1) according to one of Claims 1 to 7, wherein at least one pipe for a primary combustible gas flow (33) and at least one pipe for a secondary combustible gas flow (34) for the regulated distribution of combustible gas into the burner (1) are integrated into the lance (4).

9. Burner (1) according to one of Claims 7 or 8, wherein at least one pipe for liquid fuel (21) for the supply of at least one nozzle (13) is additionally integrated into the lance (4).

10. Burner (1) according to Claim 9, wherein the pipe for liquid fuel (21) is integrated into the lance (4) only for the supply of at least one nozzle (13) which is arranged on the end face at the axial shank end (15) and only this is constructed as a nozzle for liquid fuel.

11. Burner (1) according to one of Claims 1 to 10, wherein the position of the nozzles (13) of the lance (4) is matched to vortices which are formed in the burner (1) and which are created by means of vortex generators (17) which are located upstream.

12. Burner (1) according to one of Claims 1 to 11, wherein the lance (4) has at least one short arm (19) which reaches into the flow to the extent that the at least one nozzle (13), which is located at the respective end in each case, injects a primary combustible gas flow (33) into the center of a vortex which is created by means of a vortex generator (17) which is located upstream.

13. Burner (1) according to one of Claims 1 to 12, wherein the lance (4) has at least one long arm (20) which reaches into the flow to the extent that the at least one nozzle (13), which is located at the respective end in each case, injects a secondary combustible gas flow (34) into a boundary region of a vortex which is created by means of a vortex generator (17) which is located upstream.

14. Burner (1) according to one of Claims 1 to 13, wherein the lance (4) at least two adjacent nozzles (13) are formed in each case for injecting combustible gas (18, 33, 34) and/or carrier gas (22) with a counter-swirl.

15. Burner (1) according to one of Claims 1 to 14, wherein the lance (4) at least one pair of nozzles (13) are arranged on the end-face axial end (15) of the shank (10), and wherein these nozzles (13) are formed for injecting combustible gas (18, 33, 34) and/or carrier gas (22) with a counter-swirl.

16. Burner (1) according to one of Claims 1 to 15, wherein the lance (4) an additional fuel feed is integrated into its shank (10), and wherein a second type of combustible gas can be injected radially into the main flow from the shank (10) via the additional fuel feed.

17. Method for operating a gas turbine with at least one annular combustion chamber comprising at least one burner (1) according to one of Claims 1 to 16 and a combustion space which is connected to the outlet side of the burner (1), wherein the fuel injection in different regions of a main flow of the burner (1) is staged or regulated as a function of the load and of the fuel composition.

18. Method according to Claim 17, wherein the proportion of primary combustible gas flow (33) to the secondary combustible gas flow (34) is regulated as a function of another operating parameter of the gas turbine.

19. Method according to either of Claims 17 or 18, wherein at least some of the combustible gas (18) is directed at low load into a boundary region of the burner (1) via the at least one long arm (20) of the lance (4).

20. Method according to either of Claims 18 or 19, wherein more than half of the combustible gas (18) is directed at high load as primary combustible gas flow (33) into the center of at least one vortex in the burner (1) via the at least one short arm (19) of the lance (4).

21. Method according to one of Claims 19 or 20, wherein the fuel distribution in the burner is regulated in dependence upon the reactivity of the combustible gas.

## Revendications

1. Brûleur (1) d'une chambre de combustion d'une installation de turbine à gaz à combustion séquentielle qui présente une première et une deuxième chambre de combustion, comprenant un obstacle à l'écoulement qui, pendant le fonctionnement, génère au moins une paire de tourbillons dans l'écoulement et une lance (4) pour introduire un combustible gazeux et/ou liquide avec une base (9) et une tige (10) partant de celle-ci, la base (9), dans l'état monté de la lance (4), s'étendant perpendiculairement ou de manière inclinée par rapport à une direction d'écoulement principale (6) du brûleur (1), tandis que la tige (10) s'étend centralement dans le brûleur (1) et au moins approximativement parallèlement à la direction d'écoulement principale (6), au moins un bras saillant (19, 20) avec au moins une buse respective (13) pour introduire du combustible étant disposé à partir de la tige, l'extrémité respective de l'au moins un bras étant orientée dans la direction d'écoulement principale et s'étendant au moins approximativement parallèlement à la direction d'écoulement principale (6), et l'obstacle à l'écoulement étant disposé en amont de la lance (4).

2. Brûleur (1) selon la revendication 1, dans lequel il est prévu au moins une conduite pour le gaz porteur (22) à travers la lance (4), pour refroidir la lance et/ou alimenter l'au moins une buse (13).

3. Brûleur (1) selon la revendication 1 ou 2, dans lequel la lance (4) à chaque fois au moins une buse (13) à l'extrémité respective de l'au moins un bras (19, 20) vise dans la direction d'écoulement principale (6) du brûleur (1).

4. Brûleur (1) selon l'une quelconque des revendications 1 à 3, dans lequel l'au moins un bras (19, 20) de la lance (4) fait saillie radialement à partir de la tige (10).

5. Brûleur (1) selon l'une quelconque des revendications 1 à 4, dans lequel la tige (10) de la lance (4) présente au moins une buse (13) pour introduire du combustible dans le brûleur (1).

6. Brûleur (1) selon l'une quelconque des revendications 1 à 5, dans lequel l'au moins une buse (13) disposée au niveau de la tige (10) de la lance (4) est disposée au niveau de l'extrémité axiale frontale de l'arbre (15).

7. Brûleur (1) selon l'une quelconque des revendications 1 à 6, dans lequel dans la lance (4) sont intégrées au moins une conduite pour du gaz de combustion (18) et une conduite pour le gaz porteur (22) pour l'alimentation des buses (13).

8. Brûleur (1) selon l'une quelconque des revendications 1 à 7, dans lequel sont intégrées dans la lance (4) au moins une conduite pour un courant de gaz de combustion primaire (33) et au moins une conduite pour un courant de gaz de combustion secondaire (34) pour la répartition régulée du gaz de combustion dans le brûleur (1).

9. Brûleur (1) selon l'une quelconque des revendications 7 ou 8, dans lequel dans la lance (4) est intégrée en outre au moins une conduite pour du combustible fluide (21) pour l'alimentation d'au moins une buse (13).

10. Brûleur (1) selon la revendication 9, dans lequel dans la lance (4) est intégrée la conduite pour le combustible fluide (21) uniquement pour l'alimentation d'au moins une buse (13) disposée du côté frontal au niveau de l'extrémité axiale de l'arbre (15) et seulement celle-ci est réalisée sous forme de buse pour du combustible fluide.

11. Brûleur (1) selon l'une quelconque des revendications 1 à 10, dans lequel la position des buses (13) de la lance (4) est adaptée à des tourbillons se formant dans le brûleur (1) et générés par des générateurs de tourbillons (17) placés en amont.

12. Brûleur (1) selon l'une quelconque des revendications 1 à 11, dans lequel la lance (4) présente au moins un bras court (19) qui s'étend dans l'écoulement suffisamment loin pour que l'au moins une buse respective (13), se trouvant à son extrémité respective, injecte un courant de gaz de combustion primaire (33) dans le centre d'un tourbillon généré par un générateur de tourbillons (17) placé en amont.

13. Brûleur (1) selon l'une quelconque des revendications 1 à 12, dans lequel la lance (4) présente au moins un bras long (20) qui s'étend dans l'écoulement suffisamment loin pour que l'au moins une buse respective (13), se trouvant à son extrémité respective, injecte un courant de gaz de combustion secondaire (34) dans une région de bord d'un tourbillon généré par un générateur de tourbillons (17) placé en amont.

14. Brûleur (1) selon l'une quelconque des revendications 1 à 13, dans lequel la lance (4) au moins deux buses adjacentes respectives (13) sont réalisées avec un tourbillonnement opposé pour l'injection de gaz de combustion (18, 33, 34) et/ou de gaz porteur (22).

15. Brûleur (1) selon l'une quelconque des revendications 1 à 14, dans lequel la lance (4), à l'extrémité axiale frontale (15) de la tige (10), est disposée au moins une paire de buses (13) et dans lequel ces buses (13) sont réalisées avec un tourbillonnement opposé pour injecter du gaz de combustion (18, 33, 34) et/ou du gaz porteur (22).

16. Brûleur (1) selon l'une quelconque des revendications 1 à 15, dans lequel dans la tige (10) la lance (4) est intégrée une alimentation supplémentaire en combustible et dans lequel un deuxième type de gaz de combustion peut être injecté par le biais de celle-ci à partir de la tige (10) radialement dans l'écoulement principal.

17. Procédé pour faire fonctionner une turbine à gaz comprenant au moins une chambre de combustion annulaire constituée d'au moins un brûleur (1) selon l'une quelconque des revendications 1 à 16 et une chambre de combustion se raccordant au côté de sortie du brûleur (1), dans lequel l'injection de combustible dans les différentes régions d'un écoulement principal du brûleur (1) est étagée ou régulée en fonction de la charge et de la composition du combustible.

18. Procédé selon la revendication 17, dans lequel la proportion de courant de gaz de combustion primaire (33) par rapport au courant de gaz de combustion secondaire (34) est régulée en fonction d'un autre paramètre de fonctionnement de la turbine à gaz.

19. Procédé selon la revendication 17 ou 18, dans lequel au moins une partie du gaz de combustion (18) est conduite dans le cas d'une faible charge par le biais de l'au moins un bras long (20) de la lance (4) dans une région de bord du brûleur (1).

20. Procédé selon la revendication 18 ou 19, dans lequel plus de la moitié du gaz de combustion (18) est guidée dans le cas d'une grande charge en tant que courant de gaz de combustion primaire (33) par le biais de l'au moins un bras court (19) de la lance (4) dans le centre d'au moins un tourbillon dans le brûleur (1).

21. Procédé selon l'une quelconque des revendications 19 à 20, dans lequel la répartition du combustible dans le brûleur est régulée en fonction de la réactivité du gaz de combustion.
